# FASCICULE DE BREVET EUROPEEN

(11) **EP 1 241 052 B1**
(45) Date de publication et mention de la délivrance du brevet: **04.08.2004**
(21) Numéro de dépôt: 02364013.9
(22) Date de dépôt: 15.03.2002
(51) Int. Cl.: B60R 5/04

(54) **Plage arrière pour véhicule automobile comprenant un élément de renfort et d'habillage**
Hutablage für Kraftfahrzeuge mit Verstärkungs- und Verkleidungselement
Vehicle rear window shelf with reinforcing and covering member

(30) Priorité: 15.03.2001 FR 0103559
(43) Date de publication de la demande: 18.09.2002
(73) Titulaire: WAGON AUTOMOTIVE SNC, 79302 Bressuire Cédex (FR)
(72) Inventeur: Jeuffray, Jean-Marie, 79300 Noirlieu (FR)
(74) Mandataire: Vidon, Patrice

(56) Documents cités:
- DE-U- 9 313 436
- DE-U- 20 014 708
- FR-A- 2 566 722
- FR-A- 2 600 600
- FR-A- 2 779 403

## Description

Le domaine de l'invention est celui des plages arrières pour véhicules automobiles. Plus précisément, l'invention concerne les plages arrières équipées d'un, ou plusieurs, stores pare-soleil et d'un autre équipement, tel que des ouïes d'aération, des hauts-parleurs,...

De nombreux véhicules automobiles possèdent une plage ou tablette arrière, s'étendant horizontalement depuis le bas de la lunette arrière (ou au voisinage de celle-ci) jusqu'au dossier des sièges arrière du véhicule.

Il est aujourd'hui courant de mettre en place des stores, par exemple translucides, pour filtrer la lumière pénétrant dans le véhicule par cette lunette arrière. On profite alors de la présence de cette tablette pour fixer le store de manière que son boîtier du store contenant l'enrouleur de la toile sous la tablette, la toile étant tirée au travers de cette fente.

Cependant, cette fente est de grande largeur (la toile devant occulter l'intégralité, ou a tout le moins la plus grande partie de la lunette arrière). Elle affaiblit donc la résistance mécanique de la tablette qui risque de s'affaisser au voisinage de la fente lorsque des objets relativement lourds y sont posés.

La tablette risque donc de se déformer, de se détériorer, voire de se casser.

Ce risque est encore accru lorsque d'autres ouvertures que la fente doivent être percées dans la tablette, notamment si ces ouvertures doivent être pratiquées au voisinage de la fente. Or cela est souvent le cas, par exemple si l'on prévoit des ouïes d'aération, des emplacements de haut-parleurs, ou des logements quelconques destinés par exemple à recevoir une boîte à pharmacie ou une boîte à gants.

Dans une telle situation, la tablette est très fragile, et il est nécessaire d'utiliser des matériaux spéciaux et coûteux.

En ce qui concerne la fente de circulation de la toile du store, une solution particulière a été proposée par le titulaire de la présente demande, décrite dans le document FR-2 772 697 correspondant au préambule de la revendication 1. Selon cette technique, on prévoit une déformation de la tablette, sensiblement en forme de gouttière, dans laquelle vient prendre place le boîtier du store. Le revêtement de la tablette est ensuite aménagé pour recouvrir en grande partie cette gouttière.

Ainsi, la solidité de la tablette n'est pas affectée par la présence d'une fente s'étendant longitudinalement.

Malheureusement, cette technique particulière ne peut pas être généralisée à toutes les situations, et par exemple aux ouvertures prévues pour recevoir, le cas échéant, une ouïe d'aération ou un haut-parleur : il est alors nécessaire que ces ouvertures soient "traversantes", notamment pour des raisons de connectique.

La tablette est alors très fragile et il existe un besoin important d'une solution efficace et peu coûteuse à ce problème.

L'invention a donc notamment pour objectif de fournir une telle solution, palliant les inconvénients des techniques antérieures.

Plus précisément, un objectif de l'invention est de fournir une plage arrière dans laquelle il est possible de ménager au moins une ouverture traversante et de monter un store, tout en conservant une résistance mécanique suffisante pour supporter des charges posées sur la tablette et offrir une bonne tenue dans le temps.

Un autre objectif de l'invention est de fournir une telle plage arrière, qui puisse être fabriquée et montée aisément, et à un coût acceptable, notamment sans nécessité d'utiliser un matériau particulier.

Encore un autre objectif de l'invention est de fournir une telle plage arrière sur laquelle il est possible de prévoir des ouvertures "en réserve", destinée par exemple à recevoir plus tard un élément optionnel.

L'invention a également pour objectif de fournir une telle plage arrière, qui présente des qualités ergonomiques et esthétiques adaptées aux exigences actuelles.

Un autre objectif de l'invention est de fournir une telle plage arrière, qui protège contre le passage de petits objets dans l'une ou l'autre des ouvertures.

Encore un autre objectif de l'invention est de fournir une telle plage arrière, permettant, au moins dans certains modes de réalisation, un accès aisé au store et/ou aux autres équipements reliés aux ouvertures.

Ces objectifs, ainsi que d'autres qui apparaîtront par la suite, sont atteints selon l'invention à l'aide d'une plage arrière pour véhicule, comprenant une tablette prévue pour recevoir un store d'occultation et présentant en outre au moins une ouverture ménagée au voisinage dudit store, et coopérant avec un élément unique de renfort et d'habillage, présentant d'une part une fente au travers de laquelle la toile dudit store peut circuler et d'autre part au moins une fenêtre coïncidant au moins partiellement avec la ou les ouvertures ménagées dans ladite tablette.

Ainsi, cet élément unique solidarise toutes les ouvertures ménagées dans la tablette, et la tablette elle-même. On réduit donc fortement les risques de détérioration et de casse de la tablette, en apportant en outre une solution avantageuse en termes d'ergonomie et d'esthétique.

Selon un mode de réalisation particulier de l'invention, au moins une desdites ouvertures ménagées dans ladite tablette est une ouïe d'aération.

De façon avantageuse, la fenêtre ménagée dans ledit élément de renfort et coïncidant avec ladite ouïe d'aération est alors équipée d'une grille et/ou d'une toile permettant le passage de l'air. Cette grille peut être réglable, de façon à contrôler la quantité et /ou la direction de l'air.

On peut prévoir plusieurs ouïes similaires, de façon à répartir de façon homogène l'air insufflé sur l'ensemble de la surface de la lunette arrière. Ainsi, la plage arrière peut comprendre au moins deux ouïes d'aération.

Selon d'autres modes de réalisation avantageux, qui peuvent bien sûr être mis en oeuvre simultanément avec le précédent, au moins une desdites ouvertures ménagées dans ladite tablette est destinée à :
- recevoir un haut-parleur ; et/ou
- recevoir une boîte de rangement (trousse de pharmacie, boîte à gants,...).

De façon avantageuse, ledit élément de renfort comprend des éléments d'accrochage à au moins une desdites ouvertures ménagées dans ladite tablette, par exemple sous la forme de crochets formant cavaliers.

Selon un mode de réalisation préférentiel de l'invention, ladite tablette présente, sur sa surface supérieure, une cavité s'étendant au niveau de ladite fente.

Dans ce cas, ledit store peut avantageusement être monté sur un tube d'enroulement logé dans ladite cavité, ce qui évite la réalisation d'une fente dans la tablette. La seule fente nécessaire est en effet réalisée dans l'élément de renfort et d'habillage.

Selon une technique avantageuse, ledit tube d'enroulement est monté sur deux paliers solidaires dudit élément de renfort.

Ainsi, il est particulièrement aisé d'intervenir sur le store, en cas de problème, sans démontage de la tablette. De même, cela permet un montage très simple, le store et l'élément de renfort et d'habillage formant un tout monté en une seule opération.

Avantageusement, dans ce cas, ledit élément de renfort s'étend sensiblement dans un plan horizontal, et recouvre ladite cavité.

Selon un autre mode de réalisation particulier, ledit store est monté sous ladite plage. Dans ce cas, une fente est bien sûr prévue dans la tablette, pour permettre le passage de la toile du store.

Avantageusement, ladite fente s'étend dans un plan incliné de ladite cavité, de façon que la toile s'étende sensiblement parallèlement à la vitre arrière et sensiblement perpendiculairement à la tablette, au niveau de la fente.

Selon différents modes de réalisation de l'invention, ledit store peut être un store manuel ou un store motorisé. Dans ce dernier cas, l'élément de renfort et d'habillage peut être prévu pour recevoir tout ou partie des moyens d'actionnement et d'entraînement de la toile.

Par ailleurs, ledit élément de renfort peut porter divers équipements, et notamment au moins un feu électrique.

L'invention concerne également un élément de renfort en tant que tel, tel que décrit ci-dessus.

D'autres caractéristiques et avantages de l'invention apparaîtront plus clairement à la lecture de la description suivante d'un mode de réalisation préférentiel de l'invention, donné à titre de simple exemple illustratif et non limitatif, et des dessins annexés, parmi lesquels :
- la figure 1 est une vue en perspective d'une plage arrière selon l'invention ;
- la figure 2 est une vue en coupe de la plage arrière de la figure 1, dans le cas où le store est un store manuel monté dans le logement prévu à cet effet sur la tablette ;
- la figure 3 est une vue en coupe d'un autre mode de réalisation, dans lequel le store est motorisé et monté sous la tablette.

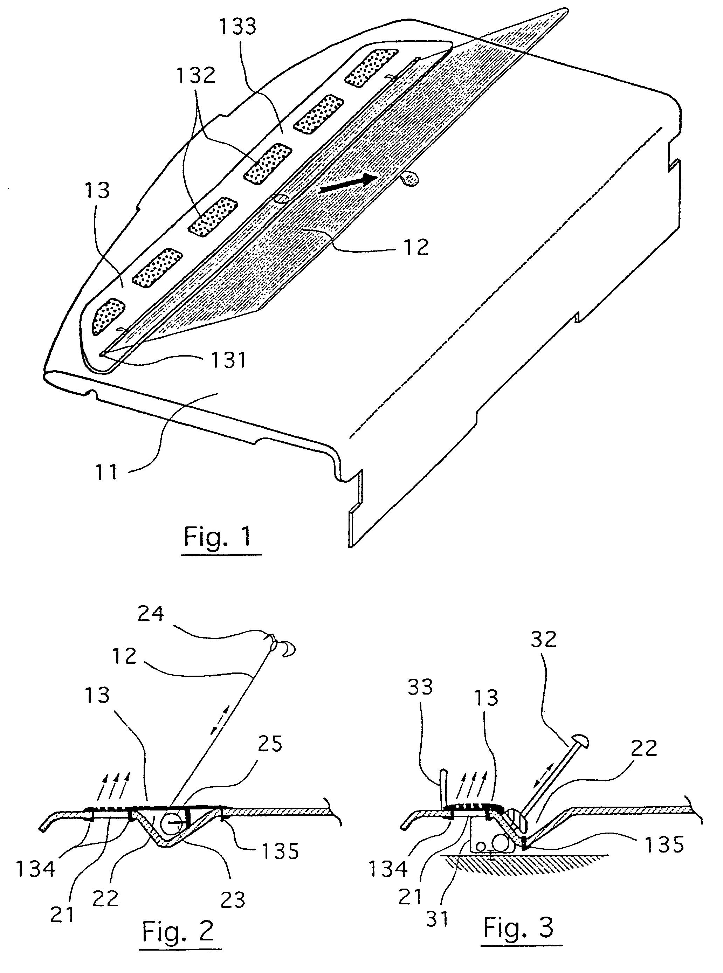

L'invention concerne donc une plage arrière de véhicule automobile, dont un exemple est illustré en figure 1.

Cette plage arrière comprend une tablette 11, réalisée par exemple en un matériau plastique, éventuellement recouvert d'un matériau de revêtement en harmonie avec le reste du véhicule. Les formes de la tablette 11 sont adaptées au véhicule, de façon que celle-ci puisse être montée à l'arrière du véhicule.

La plage arrière comprend un store, dont la toile 12 peut être déployée de façon à filtrer la lumière pénétrant par celle-ci. Il s'agit classiquement d'un store à enrouleur. Cependant, d'autres techniques de repliement et de stockage de la toile peuvent être mises en oeuvre, sans sortir du cadre de l'invention.

Ce store peut être manuel ou motorisé, et monté de plusieurs façons, comme le verra par la suite en relation avec les figures 2 et 3.

La tablette 11 est par ailleurs percée de plusieurs ouvertures 21 (voir figure 2), à proximité de la zone de déploiement de la toile. Ces ouvertures 21 sont ici destinées à des ouïes d'aération, permettant d'amener, par exemple en vue de son désembuage.

La présence de ces ouïes fragilise, bien entendu, fortement la tablette. En outre, il est nécessaire de prévoir des moyens venant les recouvrir.

L'invention propose une technique nouvelle, efficace et avantageuse, consistant en une pièce unique 13, par exemple en matière plastique, formant élément de renfort et d'habillage. Cette pièce est appelée par la suite enjoliveur, par simplification. Il est clair cependant qu'elle a en outre, et principalement, des fonctions de renfort de la tablette 11.

L'enjoliveur 13 vient donc prendre position sur la tablette, pour couvrir l'ensemble des ouvertures et la zone de déploiement du store. Il présente :
- une fente 131, dans laquelle la toile 12 peut circuler ;
- des fenêtres 132 coïncidant (au moins partiellement ) avec les ouvertures 21 ; et
- une surface 133 venant au moins en partie prendre appui sur la tablette 11.

Ainsi, l'enjoliveur 13 lie les différentes ouvertures et la tablette, ce qui renforce la rigidité et la solidité de cette dernière. Il n'y a pas de risque qu'une zone réduite de la tablette, entre deux ouvertures proches, cède sous l'effet d'une charge ou d'un choc.

Bien que cela ne soit pas illustré, on notera que l'enjoliveur 13 peut porter d'autres ouvertures, destinées à recevoir des haut-parleurs, des rangements,... Des couvercles, des grilles, des toiles, ou des moyens d'obturation (partielle ou totale) des ouïes, peuvent être prévus directement sur l'enjoliveur 13.

Comme cela apparaît plus clairement sur la figure 2, qui est une vue en coupe de la tablette de la figure 1, l'enjoliveur 13 est muni de crochets 134, qui viennent prendre place sur des bords de chacune des ouvertures 21. Ainsi, l'enjoliveur empêche, ou limite, les déformations de l'ouverture, et lie efficacement cette ouverture avec les autres ouvertures et la tablette.

En effet, l'enjoliveur 13 est également solidarisé à la tablette 11, à l'aide de crochets 135, ou de tout autre moyen adéquat, tel que des vis.

Selon un mode de réalisation avantageux de l'invention, la tablette présente une cavité 22, dans laquelle le store peut prendre position, lorsqu'il est replié selon le principe général illustré dans le document FR 2 772 697 déjà mentionné. On évite ainsi de réaliser une fente dans la tablette. Il suffit de ménager une fente 131 dans l'enjoliveur.

Cette approche présente en outre l'avantage que le mécanisme d'enroulement peut être monté directement sur l'enjoliveur 13, à l'aide de paliers 23 solidarisés directement sur ce dossier. Il n'est alors pas nécessaire de prévoir de boîtier de store, l'enjoliveur 13 fermant la cavité 22.

En termes de montage, cette technique est particulièrement avantageuse : une pièce unique et aisément montée assure les fonctions d'obturation des ouvertures, de mise en place du store (de façon automatiquement ajustée par rapport à la fente), de renfort de la tablette et d'habillage de la tablette.

De plus, elle permet un accès direct et aisé au store, en cas de problème, sans qu'il soit nécessaire de démonter la tablette arrière. Il suffit en effet de retirer l'enjoliveur 13.

Sur la figure 2, on a illustré un store manuel, dont le déploiement est obtenu en agissant sur la poignée 24, et dont le repliement se fait sous l'action d'une force de rappel appliquée au tube d'enroulement 25.

Bien entendu, ce store peut également être motorisé, selon les techniques connues. La forme et les dimensions de la cavité peuvent être adaptées pour recevoir un store, avec ou sans boîtier, avec ses moyens d'entraînement et d'actionnement.

Selon une autre approche, plus classique, le boîtier 31 du store peut être monté sous la tablette 11, comme cela est illustré en figure 3. On présente sur cette figure 3 le cas d'un store motorisé, mais il est clair qu'il pourrait tout aussi bien s'agir d'un store manuel.

Il est alors nécessaire de prévoir une fente dans la tablette, qui coïncide avec celle ménagée dans la tablette. Selon les cas, les moyens d'entraînement (par exemple des biellettes 32) peuvent être conçus pour se replier au-dessus de la tablette, dans un logement prévu à cet effet dans l'enjoliveur 13, ou au dessous de la tablette.

Sur la figure 3, l'enjoliveur 13 n'est donc pas plan, mais suit le profil de la tablette 11 sur la portion sur laquelle il est rapporté.

On a déjà signalé que l'enjoliveur 13 pouvait avoir de nombreuses fonctions secondaires. Il peut ainsi recevoir un feu "stop" 33. Cette technique permet un accès aisé à ce dernier.

De nombreuses variantes de l'invention sont envisageables en modifiant notamment un ou plusieurs des aspects suivants :
- forme et matériau de l'enjoliveur et de la tablette ;
- utilisation des ouvertures ménagées dans la tablette ;
- montage de l'enjoliveur sur la tablette ;
- type et montage du store ;

On notera que la tablette peut en outre porter, classiquement et indépendamment de l'élément de renfort et d'habillage, d'autres équipements (par exemple des haut-parleurs), notamment lorsque ceux-ci sont suffisamment éloignés des autres ouvertures.

## Revendications

1. Plage arrière pour véhicule, comprenant une tablette (11) prévue pour recevoir un store d'occultation et présentant en outre au moins une ouverture (21) ménagée au voisinage dudit store,
**caractérisé en ce qu'**elle coopère avec un élément unique de renfort et d'habillage (13), présentant d'une part une fente (131) au travers de laquelle la toile dudit store peut circuler et d'autre part au moins une fenêtre (132) coïncidant au moins partiellement avec la ou les ouvertures (21) ménagées dans ladite tablette (13).

2. Plage arrière selon la revendication 1, **caractérisé en ce qu'**au moins une desdites ouvertures (21) ménagées dans ladite tablette est une ouïe d'aération.

3. Plage arrière selon la revendication 2, **caractérisé en ce que** la fenêtre (132) ménagée dans ledit élément de renfort et coïncidant avec ladite ouïe d'aération est équipée d'une grille et/ou d'une toile permettant le passage de l'air.

4. Plage arrière selon l'une quelconque des revendications 2 et 3, **caractérisé en ce qu'**elle comprend au moins deux ouïes d'aération (21).

5. Plage arrière selon l'une quelconque des revendication 1 à 4, **caractérisé en ce qu'**au moins une desdites ouvertures ménagées dans ladite tablette est destinée à :
- recevoir un haut-parleur ; et/ou
- recevoir une boîte de rangement.

6. Plage arrière selon l'une quelconque des revendications 1 à 5, **caractérisé en ce que** ledit élément de renfort (13) comprend des éléments d'accrochage (134) à au moins une desdites ouvertures ménagées dans ladite tablette.

7. Plage arrière selon l'une quelconque des revendications 1 à 6, **caractérisé en ce que** ladite tablette présente, sur sa surface supérieure, une cavité (22) s'étendant au niveau de ladite fente.

8. Plage arrière selon la revendication 7, **caractérisé en ce que** ledit store est monté sur un tube d'enroulement (25) logé dans ladite cavité (22).

9. Plage arrière selon la revendication 8, **caractérisé en ce que** ledit tube d'enroulement (25) est monté sur deux paliers (23) solidaires dudit élément de renfort (13).

10. Plage arrière selon l'une quelconque des revendications 7 à 9, **caractérisé en ce que** ledit élément de renfort (13) recouvre ladite cavité (22).

11. Plage arrière selon l'une quelconque des revendications 1 à 7, **caractérisé en ce que** ledit store est monté sous ladite plage.

12. Plage arrière selon les revendications 7 et 11, **caractérisé en ce que** ladite fente s'étend dans un plan incliné de ladite cavité (22).

13. Plage arrière selon l'une quelconque des revendications 1 à 12, **caractérisé en ce que** ledit store est un store manuel.

14. Plage arrière selon l'une quelconque des revendications 1 à 12, **caractérisé en ce que** ledit store est un store motorisé.

15. Plage arrière selon l'une quelconque des revendications 1 à 14, **caractérisé en ce que** ledit élément de renfort porte au moins un feu électrique (33).

## Patentansprüche

1. Hintere Ablage für Fahrzeuge, die ein Fach (11) aufweist, welches ein Rollo zum Verdecken aufnehmen soll und mindestens eine Öffnung (21) in der Nähe des Rollos aufweist,
**dadurch gekennzeichnet, dass** sie mit einem einzigen Verstärkungs- und Verkleidungselement (13) zusammenwirkt, welches einen Schlitz (131) aufweist, durch den der Stoffvorhang des Rollos läuft und mindestens ein Fenster (132), das mindestens teilweise mit der Öffnung oder den Öffnungen (21) im Fach (13) übereinstimmt.

2. Hintere Ablage nach Anspruch 1,
**dadurch gekennzeichnet, dass** mindestens eine der Öffnungen (21) in dem Fach eine Belüftungsöffnung ist.

3. Hintere Ablage nach Anspruch 2,
**dadurch gekennzeichnet, dass** das in dem Verstärkungselement befindliche Fenster (132), das sich mit der Belüftungsöffnung überdeckt, ein Gitter und/oder ein Stück Stoff aufweist, um das Durchströmen der Luft zu ermöglichen.

4. Hintere Ablage nach einem der Ansprüche 2 oder 3,
**dadurch gekennzeichnet, dass** sie mindestens zwei Lufteintrittsöffnungen (21) umfasst.

5. Hintere Ablage nach einem der Ansprüche 1 bis 4,
**dadurch gekennzeichnet, dass** mindestens eine der in dem Fach befindlichen Öffnungen den folgenden Zweck erfüllt:
- Aufnahme eines Lautsprechers und/oder
- Aufnahme eines Aufbewahrungskastens.

6. Hintere Ablage nach einem der Ansprüche 1 bis 5,
**dadurch gekennzeichnet, dass** das Verstärkungselement (13) über Mittel zum Einhaken (134) in mindestens einer der in dem Fach befindlichen Öffnungen aufweist.

7. Hintere Ablage nach einem der Ansprüche 1 bis 6,
**dadurch gekennzeichnet, dass** das Fach an seiner oberen Fläche einen Hohlraum (22) aufweist, der sich auf der Höhe dieses Faches erstreckt.

8. Hintere Ablage nach Anspruch 7,
**dadurch gekennzeichnet, dass** das Rollo an einer in dem Hohlraum (22) untergebrachten Aufrollwalze (25) befestigt ist.

9. Hintere Ablage nach Anspruch 8,
**dadurch gekennzeichnet, dass** die Aufrollwalze (25) auf zwei mit dem Verstärkungselement (13) verbundene Lager (23) angebracht ist.

10. Hintere Ablage nach einem der Ansprüche 7 bis 9,
**dadurch gekennzeichnet, dass** das Verstärkungselement (13) den Hohlraum (22) abdeckt.

11. Hintere Ablage nach einem der Ansprüche 1 bis 7,
**dadurch gekennzeichnet, dass** das Rollo unter dieser Ablage angebracht ist.

12. Hintere Ablage nach den Ansprüchen 7 und 11,
**dadurch gekennzeichnet, dass** der Schlitz in einer schrägen Ebene des Hohlraums (22) angebracht ist.

13. Hintere Ablage nach einem der Ansprüche 1 bis 12,
**dadurch gekennzeichnet, dass** es sich bei dem Rollo um ein manuell betätigtes Rollo handelt.

14. Hintere Ablage nach einem der Ansprüche 1 bis 12,
**dadurch gekennzeichnet, dass** das Rollo über einen Motorantrieb verfügt.

15. Hintere Ablage nach einem der Ansprüche 1 bis 14,
**dadurch gekennzeichnet, dass** das Verstärkungselement mindestens ein elektrisches Licht (33) trägt.

## Claims

1. Rear parcel shelf for a vehicle, comprising a shelf (11) designed to receive a blind and having additionally at least one opening (21) provided in the vicinity of the said blind,
**characterized in that** it cooperates with a single reinforcing and decorative element (13) having on the one hand a slot (131) through which the cloth of the said blind can pass and on the other hand at least one window (132) coinciding at least partially with the opening(s) (21) provided in the said shelf (13).

2. Rear parcel shelf according to claim 1, **characterized in that** at least one of the said openings (21) provided in the said shelf is an aeration intake.

3. Rear parcel shelf according to claim 2, **characterized in that** the window (132) provided in the said reinforcing element and coinciding with the said ventilation intake is fitted with a grill and/or a cloth enabling air to pass.

4. Rear parcel shelf according to either of claims 2 and 3, **characterized in that** it includes at least two air intakes (21).

5. Rear parcel shelf according to any one of claims 1 to 4, **characterized in that** at least one of the said openings provided in the said shelf is designed to receive :
- a speaker; and/or
- a storage box.

6. Rear parcel shelf according to any one of claims 1 to 5, **characterized in that** the said reinforcing element (13) includes elements (134) for attaching to at least one of the said openings provided in the said shelf.

7. Rear parcel shelf according to any one of claims 1 to 6, **characterized in that** the said shelf has, on its upper surface, a cavity (22) extending to the region of the said slot.

8. Rear parcel shelf according to claim 7, **characterized in that** the said blind is mounted on a roll-up tube (25) housed in the said cavity (22).

9. Rear parcel shelf according to claim 8, **characterized in that** the said roll-up tube (25) is mounted on two bearings (23) secured to the said reinforcing element (13).

10. Rear parcel shelf according to any one of claims 7 to 9, **characterized in that** the said reinforcing element (13) covers the said cavity (22).

11. Rear parcel shelf according to any one of claims 1 to 7, **characterized in that** the said blind is mounted under the said parcel shelf.

12. Rear parcel shelf according to claims 7 and 11, **characterized in that** the said slot extends in an inclined plane of the aid cavity (22).

13. Rear parcel shelf according to any one of claims 1 to 12, **characterized in that** the said blind is a manually operated blind.

14. Rear parcel shelf according to any one of claims 1 to 12, **characterized in that** the said blind is a motorised blind.

15. Rear parcel shelf according to any one of claims 1 to 14, **characterized in that** the said reinforcing element carries at least one electric light (33).
